Europäisches Patentamt

European Patent Office

Office européen des brevets

(19)

(11) Veröffentlichungsnummer : **0 066 105 B1**

# (12) EUROPÄISCHE PATENTSCHRIFT

(45) Veröffentlichungstag der Patentschrift :
24.04.85

(21) Anmeldenummer : 82103866.8

(22) Anmeldetag : 05.05.82

(51) Int. Cl.⁴ : **B 60 T 17/22**

(54) **Anzeigevorrichtung für Fahrzeugbremsen, insbesondere Scheibenbremsen von Schienenfahrzeugen.**

(30) Priorität : 03.06.81 DE 3122011

(43) Veröffentlichungstag der Anmeldung :
08.12.82 Patentblatt 82/49

(45) Bekanntmachung des Hinweises auf die Patenterteilung : 24.04.85 Patentblatt 85/17

(84) Benannte Vertragsstaaten :
AT BE CH DE IT LI

(56) Entgegenhaltungen :
CH-A-  527 719
DE-B- 2 525 469
DE-C-   177 770
FR-A- 1 359 829
FR-A- 2 112 076
FR-A- 2 149 847
US-A- 2 979 364

(73) Patentinhaber : **Knorr-Bremse GmbH**
**Moosacher Strasse 80**
**D-8000 München 40 (DE)**

(72) Erfinder : **Skach, Kuno**
**Koschatgasse 34**
**A-1190 Wien (AT)**

EP 0 066 105 B1

## Beschreibung

Die Erfindung betrifft eine Anzeigevorrichtung gemäß dem Oberbegriff des Anspruches 1.

Es sind Anzeigevorrichtungen bekannt (DE-B-2 525 469), die aus einem Gehäuse und einem Fenster bestehen. In dem Gehäuse befindet sich ein Zylinder mit einem Druckluftanschluß, der an eine Rohrleitung angeschlossen ist, welche den den Bremszylindern zuzuführenden Bremszylinderdruck führt. Der dem Bremsdruck proportionale Bremszylinderdruck stellt hierbei zugleich den Signaldruck dar. Im Zylinder ist ein Kolben mit einer Kolbenstange verschieblich, die durch den dem Druckluftanschluß gegenüberliegenden Zylinderboden geführt ist. Im Zylinder ist eine Feder vorhanden, die den Kolben belastet und sich innen am Zylinderboden abstützt. Außerhalb des Zylinders ist an der Kolbenstange ein Schauzeichen festgehalten, das in zwei Farbfelder « grün » und « rot » unterteilt ist. Ist der Zylinder entlüftet, befindet sich der Kolben unter der Kraft der ihn belastenden Feder in seiner unteren Endstellung, in der das Schauzeichen mit seinem grünen Farbfeld vor einem Fenster steht. Hierdurch wird angezeigt, daß die Bremse gelöst ist. Ist der Zylinder mit Druckluft beaufschlagt, befindet sich der Kolben entgegen der Kraft der Feder in seiner anderen Endstellung, in der das Schauzeichen mit seinem roten Farbfeld vor dem Fenster erscheint. Hierdurch wird angezeigt, daß die Bremse eingebremst ist. Der Kolbendurchmesser und die Kraft der Feder sind im allgemeinen derart aufeinander abgestimmt, daß diese Anzeigevorrichtungen bei einem Bremszylinderderdruck von ca. 0,5 bar von der grünen Anzeige (Bremse gelöst) auf die rote Anzeige (Bremse betätigt) umschalten, wobei die Umschaltung in beiden Schaltrichtungen etwa in diesem Druckbereich erfolgt.

Die Druckmittelbremsen von Schienenfahrzeugen weisen, insbesondere aufgrund mechanischer Kolben- und Gestängereibungen, eine gewisse Hysterese hinsichtlich der Bremskraft zwischen Einbrems- und Bremslösevorgängen auf, derart, daß beispielsweise beim Einbremsen erst bei Erreichen eines Bremszylinderdruckes von ca. 0,5 bar die Fahrzeugbremsen anlegen und eine gewisse Bremskraft ausüben, bei Bremslösevorgängen dagegen bis zum Absenken des Bremszylinderdruckes auf ca. 0,2 bar angelegt bleiben und eine merkliche Bremskraft erzeugen, also erst unterhalb ca. 0,2 bar völlig gelöst sind. Im Hinblick auf diese Hysterese und dem in beiden Richtungen erfolgenden, wenigstens nahezu hysteresefreien Schalten der bekannten Anzeigevorrichtungen ist mit den bekannten Anzeigevorrichtungen eine exakte Anzeige, ob die Fahrzeugbremse gelöst oder gebremst ist, nicht möglich :

Während Lösevorgängen zeigen diese Anzeigevorrichtungen beim Unterschreiten eines Bremszylinderdrucks von ca. 0,5 bar gelöste Bremsen an, während die Bremse bis zum Unterschreiten von ca. 0,2 bar angelegt verbleibt ; im Bereich von 0,5 bis 0,2 bar erfolgt also bei Lösevorgängen eine Fehlanzeige.

Aus der gattungsbildenden FR-A-1 359 829 sind Anzeigevorrichtungen für Druckmittelbremsen bekannt, bei welchen der Bremsdruck drei auf unterschiedlich hohe Schaltdrücke eingestellte Druckschalter beaufschlagt, deren jeder Druckschalter eine Anzeigelampe schaltet. Bei gelöster Bremse leuchtet keine Anzeigelampe, mit ansteigender Bremsbetätigung werden nacheinander die drei Anzeigelampen eingeschaltet und zeigen somit die Stärke der Bremsbetätigung an. Diese Anzeigevorrichtung ist jedoch nicht zum Beheben der vorstehend erläuterten, auf der Hysterese der Fahrzeugbremsen beruhenden Fehlanzeige-Möglichkeiten geeignet, auch bei entsprechender Verlagerung der Schaltdrücke zweier Druckschalter auf die Grenzwerte der Bremsdruckhysterese für gelöste angelegte Bremsen würden sich abhängig von der Bremsdruckänderungsrichtung unterschiedliche und damit Fehlinterpretation ermöglichende Schaltbilder ergeben.

Aufgabe der Erfindung ist es daher, eine Anzeigevorrichtung der eingangs bezeichneten Art anzugeben, die sicher zu erkennen gibt, ob die Bremse gelöst oder gebremst ist und die außerdem erkennen läßt, daß die Bremse nocht nicht sicher gelöst bzw. noch nicht sicher gebremst ist.

Diese Aufgabe der Erfindung wird mit den kennzeichnenden Merkmalen des Anspruches 1 gelöst.

Durch diese Ausbildung der Anzeigevorrichtung wird erreicht, daß die Anzeigevorrichtung nach Verlassen ihrer einen Grundstellung erst nach einer wesentlichen, weiteren Änderung des Signaldrucks in ihre andere Grundstellung gelangt, im Zwischenbereich somit höchstens eine Anzeige « noch nicht sicher gebremst » bzw. « noch nicht sicher gelöst », aber keine exakte Anzeige gemäß den Grundstellungen erfolgen kann.

Vorteilhafte Ausführungen und Weiterbildungen nach der Erfindung ergeben sich aus den Merkmalen der Unteransprüche. In der nachfolgenden Beschreibung sind bevorzugte Ausführungsbeispiele in einer schematischen Zeichnung dargestellt. Hierin zeigt :

Figur 1 ein erstes Ausführungsbeispiel einer erfindungsgemäßen Anzeigevorrichtung im Schnitt,

Figur 2 ein zweites Ausführungsbeispiel ähnlich dem nach Fig. 1, und

Figur 3 ein Druck/Kolbenhub-Diagramm der Anzeigevorrichtung nach den Fig. 1 oder 2.

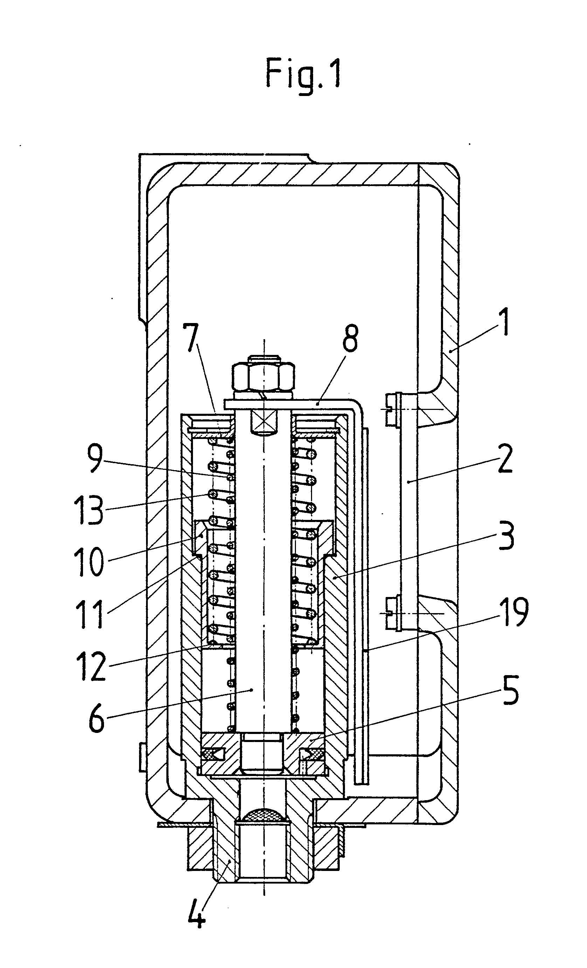

Nach Figur 1 weist ein Gehäuse 1 eine erfindungsgemäßen Anzeigevorrichtung ein Sichtfenster 2 auf. In dem Gehäuse 1 ist ein Zylinder 3 angebracht, der einen Druckluftanschluß 4 besitzt. In dem Zylinder ist ein Kolben 5 mit einer Kolbenstange 6 verschieblich angeordnet. Die Kolbenstange 6 ist durch den Boden 7 des Zylinders 3 geführt. Außerhalb des Zylinders greift an die Kolbenstange 6 ein Haltebügel 8 an, an den ein Schauzeichen 19 befestigt ist, das einen unteren roten und einen oberen grünen Abschnitt aufweist. Am Boden 7 des Zylinders 3 liegt das eine Ende einer Feder 9 an, deren anderes Ende sich auf dem Kolben 5 abstützt. Eine Hülse 10 ist im Zylinder 3 zwischen einem Anschlag 11 im Zylinder 3 und dem Zylinderboden 7 verschieblich geführt. An einem inneren Absatz 12 der Hülse 10 stützt sich das eine Ende einer vorgespannten, zweiten Feder 13 ab, deren anderes Ende ebenfalls am Zylinderboden 7 anliegt.

Die Anzeigevorrichtung arbeitet wie folgt :

In der dargestellten Stellung ist die an den Druckluftanschluß 4 angeschlossene, nicht dargestellte Bremsleitung entlüftet, so daß die Bremse vollgelöst ist. Demgemäß befindet sich das Schauzeichen 19 mit seinem grünen Abschnitt vor dem Sichtfenster 2, wodurch « die Bremse gelöst » angezeigt ist. Wird Druckluft in die Bremsleitung eingesteuert, um die Bremse zu betätigen, gelangt auch Druckluft über den Anschluß 4 in den Zylinder 3 und drückt gegen den Kolben 5. Beim Überschreiten einer bestimmten, niedrigen Druckschwelle von ca. 0,2 bar bewegt sich der Kolben 5 entgegen der Kraft der relativ schwachen Feder 9 in Figur 1 nach oben, wobei mehr und mehr der grüne Abschnitt des Schauzeichens 19 nach oben aus dem Sichtfenster 2 hinausgeschoben wird und dafür der rote Abschnitt des Schauzeichens 19 von unten hinter dem Sichtfenster 2 auftaucht, bis der Kolben 5 an der Hülse 10 anschlägt.

In dieser so erreichten Zwischenstellung, die anzeigt daß die Bremse eventuell nicht voll gelöst, aber auch nicht sicher eingebremst ist, befinden sich der grüne und der rote Abschnitt des Schauzeichens 19 etwa jeweils zur Hälfte hinter dem Sichtfenster 2.

Das Schauzeichen verharrt in dieser Zwischenstellung so lange, bis der Druck in der Bremsleitung eine bestimmte Druckschwelle von ca. 0,5 bar überschritten hat, woraufhin der Kolben 5 entgegen der Kraft der ersten und der vorgespannten zweiten Feder 9 und 13 weiter nach oben verschoben wird, bis der rote Abschnitt des Schauzeichens 19 vollständig hinter das Sichtfenster 2 geschoben ist, um « Bremse angelegt » anzuzeigen. Beim weiteren Verstärken der Bremsung ändert die Anzeigevorrichtung ihre Stellung und Anzeige nicht mehr.

Beim Lösen der Bremse verharrt die Anzeigevorrichtung ebenfalls in ihrer « rot » anzeigenden Stellung, bis ihr Beaufschlagungsdruck, also der Bremszylinderdruck bzw. der in der Bremsleitung herrschende Druck, bis auf ca. 0,5 bar abgefallen ist. Bei Unterschreiten dieser Druckgrenze drücken die vereinten Kräfte der Federn 9 und 13 den Kolben 5 abwärts, bis sich die Hülse 10 auf den Anschlag 11 aufsetzt ; während dieses Vorganges gelangt wieder der grüne Abschnitt des Schauzeichens 19 zur Hälfte hinter das Sichtfenster 2, während der rote Abschnitt nur zur Hälfte sichtbar verbleibt. Damit ist wieder die je hälftige Anzeige rot/grün erreicht mit der Bedeutung, daß die Bremse weder sicher angelegt noch sicher gelöst ist.

Die Anzeigevorrichtung verbleibt bis zum Unterschreiten eines Beaufschlagungsdruckes von ca. 0,2 bar in dieser Schaltstellung ; beim Unterschreiten von ca. 0,2 bar vermag die Feder 9 allein — die Feder 13 ist durch den Anschlag 11 abgefangen — den Kolben 5 bis in seine untere Endstellung weiter abwärts zu drücken, wobei der rote Abschnitt des Schauzeichens 19 völlig aus dem Bereich des Sichtfensters 2 austritt und hinter diesem nur mehr der grüne Abschnitt, bedeutend « Bremse gelöst », sichtbar wird.

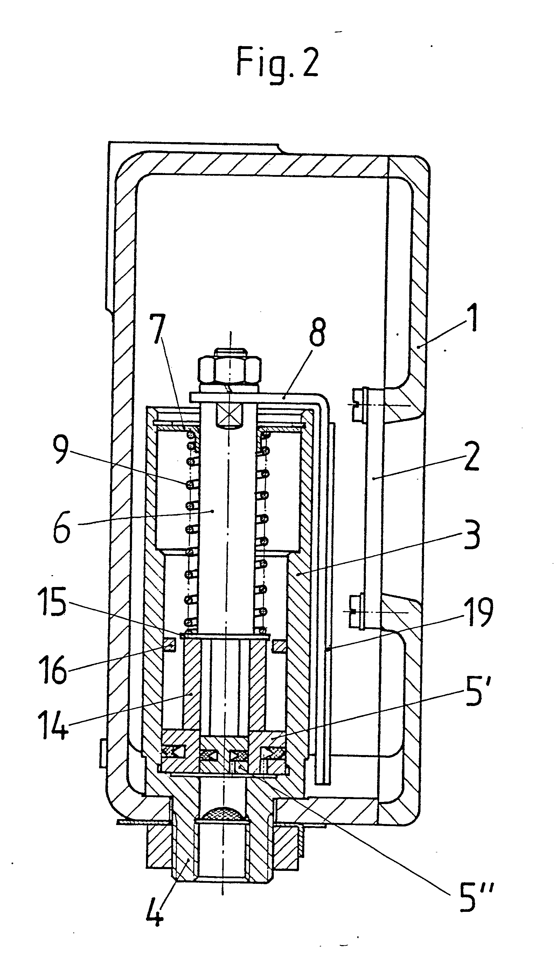

Figur 2 zeigt eine pneumatische Anzeigevorrichtung nach der Erfindung ähnliche derjenigen nach Figur 1. Dabei beziehen sich gleiche Bezugszeichen in den Figuren 1 und 2 auf gleiche oder entsprechende Teile.

Der wesentliche Unterschied der Ausführung nach Figur 2 gegenüber der Ausführung nach Fig. 1 besteht darin, daß der Kolben gemäß Fig. 2 in einen äußeren Kolbenring 5' mit einer anschließenden Hülse 14 und einem inneren Kolben 5'' unterteilt ist, der in dem Kolbenring 5' und der anschließenden Hülse 14 verschieblich ist. Der Kolbenring 5' ist mit der Hülse 14 derart verbunden, daß der Übergang zwischen beiden dicht ist, also keine Druckluft am Übergang von radialinnen nach radialaußen durchtreten kann, und daß der innere Kolben 5'' den Übergang hemmungsfrei überschleifen kann. Zweckmäßig können Kolbenring 5' und Hülse 14 einstückig sein. Der innere Kolben 5' ist mit der Kolbenstange 6 verbunden. An der Kolbenstange 6 befindet sich an einem mittleren Kolbenstangenabschnitt ein Anschlag 15, an dem sich die Feder 9 abstützt und die Hülse 14 anlegen kann. In einem mittleren Abschnitt des Zylinders 3 befindet sich ein Anschlag 16, bis zu dem der Ringkolben 5' hochgefahren werden kann. Im übrigen entspricht die Anzeigevorrichtung derjenigen nach Fig. 1, wobei jedoch deren Feder 13 und Hülse 10 mit Anschlag 11 entfallen.

Die Anzeigevorrichtung nach Fig. 2 arbeitet wie folgt :

In der dargestellten Stellung ist die nicht dargestellte Bremsleitung entlüftet, die an den Anschluß 4 angeschlossen ist. Damit ist auch der Zylinder 3 frei von Druckluft, so daß beide Kolben 5' und 5'' sich in ihrer dargestellten, unteren Grundstellung befinden, in der sich der grüne Abschnitt des Schauzeichens 19 « Bremse gelöst » vor dem Sichtfenster 2 befindet. In dieser Grundstellung sind beide Kolben 5' und 5'' durch die Kraft der Feder 9 gehalten, wobei sich der äußere Ringkolben 5' über die Hülse 14 an dem Kolbenanschlag 15 abstützt.

Wird die Bremse betätigt, so wird in die Bremsleitung Druckluft eingespeist, die auch in den Zylinder 3 gelangt. Nach Übersteigen einer bestimmten Druckschwelle von ca. 0,2 bar werden beide Kolben 5' und 5'' gemeinsam gegen die Kraft der Feder 9 gemäß der Fig. 2 nach oben verschoben, bis der äußere Kolbenring 5' durch den Anschlag 16 in einer mittleren Stellung im Zylinder 3 abgefangen wird. In dieser mittleren Stellung befinden sich etwa die Hälfte des roten und die Hälfte des grünen Abschnittes des Schauzeichens 19 hinter dem Sichtfenster 2. In dieser Stellung wird wieder angezeigt, daß die Bremse nicht voll gelöst, aber auch nicht sicher eingebremst ist.

Aus dieser Stellung ist nur noch der innere Kolben 5″ mit der Kolbenstange 6 weiter nach oben verschiebbar. Wegen des Flächensprunges von der von beiden Kolben 5′ und 5″ gebildeten, größeren Kolbenfläche auf die wesentlich kleinere Kolbenfläche des inneren Kolbens 5″ verharrt die Anzeigevorrichtung in dieser Zwischenstellung so lange, bis der Bremsdruck eine bestimmte, zweite Druckschwelle von ca. 0,5 bar überschritten hat, woraufhin der innere Kolben 5″ mit der Kolbenstange 6 weiter in seine obere Grundstellung verschoben wird, in der der rote Abschnitt des Schauzeichens 19 voll hinter das Sichtfenster 2 gefahren wird.

Während also die Kraft der Feder 9 zunächst für die Bewegung beider Kolben 5′ und 5″ gemeinsam maßgebend ist, ist nach dem Festliegen des äußeren Ringkolbens 5′ an dem Anschlag 16 nur mehr die Stellkraft des kleineren, inneren Kolbens 5″ der Kraft der Feder 9 gegenübergestellt, so daß erfindungsgemäß ein erheblicher Drucksprung von ca. 0,2 bar auf ca. 0,5 bar erforderlich ist, um die Anzeigevorrichtung aus der oben angegebenen, mittleren Stellung heraus in die Endlage zu führen.

Beim Bremsenlösen spielen sich entsprechend umgekehrt verlaufende Vorgänge — analog zur Beschreibung zu Fig. 1 — ab.

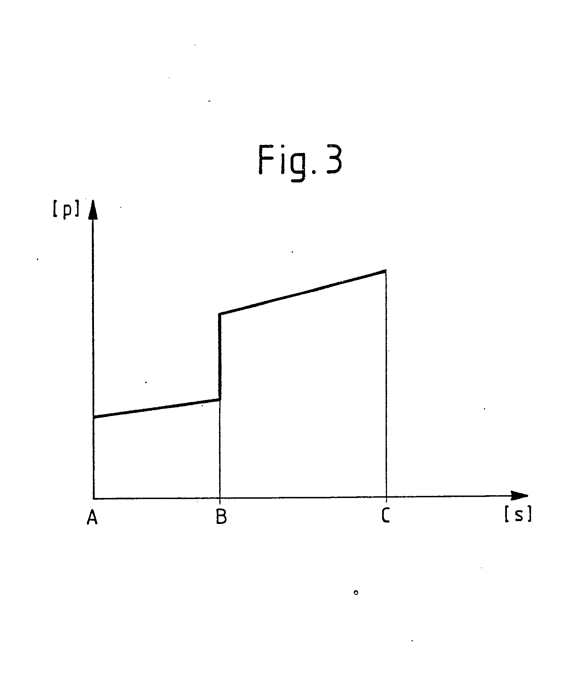

Figur 3 verdeutlicht den in den beiden vorstehenden Ausführungsbeispielen erforderlichen Druckbereich nach der Erfindung, während welchen die Anzeigevorrichtung während Brems- und Lösevorgängen in der mittleren Stellung verbleibt.

In Fig. 3 ist auf der Abszisse der Hubweg s des bzw. der Kolben 5 bzw. 5′, 5″ und auf der Ordinate der Signaldruck P aufgetragen, der aufgebracht werden muß, um den beziehungsweise die Kolben aus ihrer einen Grundstellung A (« Bremse gelöst ») über die Zwischenstellung B in die andere Grundstellung C (« Bremse angelegt ») bzw. umgekehrt zu verschieben. In der indifferenten Zwischenstellung B des beziehungsweise der Kolben, in der die Bremse nicht voll gelöst, aber auch nicht sicher angelegt sein kann, ist eine deutliche Druckänderung erforderlich, um den bzw. die Kolben nach Erreichen der Zwischenstellung wieder aus dieser heraus in die jeweils andere Grundstellung zu verschieben.

Bei den Anzeigevorrichtungen nach Fig. 1 und Fig. 2 kann das Schauzeichen 19 selbstverständlich auch abgewandelt ausgebildet sein, beispielsweise lediglich eine grüne Halbfläche aufweisen, welche zwischen das Sichtfenster 2 und eine mit Abstand hinter, diesem ortsfest angeordnete, rote Fläche eintauchbar ist.

Der Grundgedanke der Erfindung, außer den beiden Grundstellungen « Bremse gelöst » und « Bremse angelegt » eine indifferente Zwischenstellung für den Bereich einzuführen, in welchem die Bremse weder voll gelöst noch voll angelegt sein muß, ist nicht auf pneumatische Anzeigevorrichtungen beschränkt. Eine solche dritte, indifferente Zwischenstellung läßt sich also nicht nur für pneumatische, sondern auch für elektrische Anzeigevorrichtungen verwirklichen.

**Patentansprüche**

1. Anzeigevorrichtung für druckmittelgesteuerte Fahrzeugbremsen, zur Anzeige ihres Anlegezustandes, insbesondere für Scheibenbremsen von Schienenfahrzeugen, mit wenigstens einer von einem dem Bremsdruck der Fahrzeugbremsen entsprechenden Signaldruck (P) druckmittelgesteuerten Schaltvorrichtung zur Überwachung von wenigstens zwei verschiedenen Schauzeichen (19), wobei die Schaltvorrichtung mit steigendem Signaldruck (P) in zwei Grundstellungen (A ; C) und eine zwischen diesen liegende Zwischenstellung (B) mit besonderer Anzeige einsteuerbar ist und die Zwischenstellung (B) mittels eines Signaldruckes (P) einstellbar ist, der innerhalb eines zwischen den den beiden Grundstellungen (A ; C) entsprechenden Signaldrücken (P) befindlichen Signaldruckbereiches liegt, dadurch gekennzeichnet, daß in der ersten Grundstellung (A) bei niedrigem Signaldruck (P) ein Schauzeichen (9) für die Lösestellung der Fahrzeugbremse und in der Zwischenstellung (B) die besondere Anzeige als Schauzeichen für indifferenten Bremszustand, in welchem die Fahrzeugbremsen weder gelöst noch angelegt sein können, betätigt wird.

2. Anzeigevorrichtung nach Anspruch 1, deren Schaltvorrichtung mindestens einen Kolben (5) aufweist, der vom jeweiligen Bremsdruck der Fahrzeugbremsen beaufschlagt ist und der entgegen dem Bremsdruck von einer die Rückstellkraft bildenden mechanischen Federkraft (9) belastet ist, dadurch gekennzeichnet, daß die Federkraft von einer ersten, schon bei niedrigen Bremsdrücken aus einer ersten Grundstellung (A) des Kolbens (5) heraus eine wesentliche Kolbenverschiebung bis in eine mittlere Kolbenstellung (B) erlaubenden Feder (9) und einer vorgespannten, zweiten, erst beim Überschreiten einer bestimmten, größeren Bremsdruckhöhe eine weitere Kolbenverschiebung aus der mittleren Kolbenstellung (B) bis in eine zweite Endstellung (C) erlaubenden Feder (13) gebildet ist.

3. Anzeigevorrichtung nach Anspruch 2, dadurch gekennzeichnet, daß die erste Feder (9) zwischen dem Zylinderboden (7) und dem Kolben (5) und die zweite Feder (13) zwischen dem Zylinderboden (7) und einer im Zylinder (3) vom Kolben (5) verschieblichen Hülse (10) angeordnet ist, die mit Abstand von den beiden Grundstellungen (A und C) des Kolbens (5) im Zylinder (3) abgefangen ist.

4. Anzeigevorrichtung nach Anspruch 1, deren Schaltvorrichtung mindestens einen Kolben (5', 5") aufweist, der vom jeweiligen Bremsdruck der Fahrzeugbremsen beaufschlagt ist und der entgegen dem Bremsdruck von einer die Rückstellkraft bildenden mechanischen Federkraft (9) belastet ist, dadurch gekennzeichnet, daß der Kolben in zwei Teilkolben (5' und 5") aufgeteilt ist, die gemeinsam entgegen der von einer Feder (9) gebildeten Federkraft Im einer Grundstellung (A) bis dem mittleren Anzeigebereich (B) entsprechenden Hubbereich verstellbar sind, während im folgenden Hubbereich, entsprechend dem mittleren Anzeigebereich (B) bis zur zweiten Grundstellung (C), nur einer der Kolben (5") entgegen der Kraft der Feder (9) beweglich ist.

5. Anzeigevorrichtung nach Anspruch 4, dadurch gekennzeichnet, daß der Kolben in einen äußeren Ringkolben (5') und einen in dem Ringkolben (5') verschieblichen, inneren Kolben (5") aufgeteilt ist, daß die Feder (9) zwischen einem Zylinderboden (7) und beiden Kolben (5' und 5") angeordnet ist und daß im Zylinder (3) ein Anschlag (16) zum Abfangen des Ringkolbens (5') in einer mittleren Kolbenstellung (B) zwischen den beiden Grundstellungen (A und C) vorhanden ist.

6. Anzeigevorrichtung nach Anspruch 5, dadurch gekennzeichnet, daß der Ringkolben (5') einen zylindrischen, den inneren Kolben (5") führenden Ansatz (14) trägt, daß der innere Kolben (5") mit einer ein Schauzeichen (19) tragenden Kolbenstange (6) verbunden ist, daß die Feder (9) die Kolbenstange (6) belastet, und daß unter der Kraft der Feder (9) ein Anschlag (15) der Kolbenstange (6) gegen die Stirnfläche des Ansatzes (14) andrückbar ist.

7. Anzeigevorrichtung nach Anspruch 1, dadurch gekennzeichnet, daß sich der Signal-Druckbereich von ca. 0,2 bar bis ca. 0,5 bar erstreckt.

**Claims**

1. Indicating device for fluid-controlled vehicle brakes, for indicating their state of application, especially for disc brakes in rail vehicles, comprising at least one switching device with fluid control by a signal pressure (P) corresponding to the braking pressure of the vehicle brakes, the said switching device serving to monitor at least two different visual signs (19) and being capable of movement with rising signal pressure (P) to two basic positions (A ; C) and to a specially indicated intermediate position (B) between the two basic positions, and the intermediate position (B) being capable of adjustment by means of a signal pressure (P) which is within a signal pressure range between the signal pressures (P) corresponding to the two basic positions (A ; C), wherein, at the first basic position (A) at low signal pressure (P), a visual sign (19) is actuated for the release position of the vehicle brakes and, at the intermediate position (B), the special indicator is actuated as a visual sign of an indifferent braking condition in which the vehicle brakes can be neither released nor applied.

2. Indicating device as defined in Claim 1, the switching device of which has at least one piston (5) which is charged by the respective braking pressure of the vehicle brakes and which is loaded in the opposite direction to the braking pressure by a mechanical spring force (9) acting as the return force, wherein the spring force is formed by a first spring (9) allowing the piston (5) to shift even at low braking pressures from a first basic position (A) by a substantial amount to a centre piston position (B), and by a preloaded, second spring (13) allowing the piston only to shift by a further amount from the centre position (B) to a second end position (C) when a certain, higher braking pressure level is exceeded.

3. Indicating device as defined in Claim 2, wherein the first spring (9) is arranged between the cylinder bottom (7) and the piston (5), and the second spring (13) is arranged between the cylinder bottom (7) and a sleeve (10) which can be shifted in the cylinder (3) by the piston (5) and which is intercepted at a certain distance from the two basic positions (A and C) of the piston (5) in the cylinder (3).

4. Indicating device as defined in Claim 1, the switching device of which has at least one piston (5', 5") which is charged by the respective braking pressure of the vehicle brakes and which is loaded in the opposite direction to the braking pressure by a mechanical spring force (9) acting as the return force, wherein the piston is subdivided into two partial pistons (5' and 5") which are capable of joint shifting, against the spring force formed by a spring (9), within the range of movement extending from a basic position (A) to the centre indication range (B), whereas in the subsequent range of movement, represented by the area from the centre indication range (B) to the second basic position (C), only one of the pistons (5") can be moved against the force of the spring (9).

5. Indicating device as defined in Claim 4, wherein the piston is subdivided into an outer ring piston (5') and an inner piston (5") movable in the ring piston (5'), wherein the spring (9) is arranged between a cylinder bottom (7) and the two pistons (5' and 5"), and wherein there is in the cylinder (3) a stop (16) to intercept the ring piston (5') at a centre piston position (B) between the two basic positions (A and C).

6. Indicating device as defined in Claim 5, wherein the ring piston (5') carries a cylindrical shoulder (14) guiding the inner piston (5"), wherein the inner piston (5") is joined to a piston rod (6) carrying a visual sign (19), wherein the spring (9) loads the piston rod (6), and wherein a stop (15) of the piston rod (6) can be pressed against the end face of the shoulder (14) under the force of the spring (9).

7. Indicating device as defined in Claim 1, wherein the signal pressure range extends from about 0.2 bar to about 0.5 bar.

## Revendications

1. Dispositif indicateur pour freins de véhicules commandés par un fluide sous pression destiné à indiquer leur état d'application et, en particulier, pour freins à disques de véhicules ferroviaires avec, au moins, un dispositif de commutation commandé par le fluide sous pression, sous l'effet de la pression de signalisation (P) correspondant à la pression de freinage des freins du véhicule, afin de mettre en évidence au moins deux voyants (19) différents, le dispositif de commutation pouvant être amené, quand la pression de signalisation (P) augmente, en deux positions de base (A, C) et en une position intermédiaire située entre celles-ci (B), avec une indication particulière et la position intermédiaire (B) pouvant être réglée au moyen d'une pression de signalisation (P) qui se trouve dans la gamme des pressions de signalisation comprise entre les pressions de signalisation (P) correspondant aux deux positions de base (A, C), caractérisé en ce que, dans la première position de base (A), un voyant (19) est amené en position indiquant le desserrage des freins du véhicule, que dans la position intermédiaire (B) on obtient une indication particulière correspondant à un état de freinage d'indifférence dans lequel les freins du véhicule peuvent être soit desserrés, soit appliqués.

2. Dispositif indicateur selon la revendication 1, dont le dispositif de commutation comprend au moins un piston (5) qui est commandé par la pression de freinage appliquée à chaque instant aux freins du véhicule et qui est chargé par la force d'un ressort mécanique (9) constituant une force de retour opposée à la pression de freinage, caractérisé en ce que la force du ressort est constituée par un premier ressort (9) permettant, dès l'existence d'une faible pression de freinage, le déplacement du piston (5) depuis une première position de base (A) jusqu'à une position de piston intermédiaire (B) et sensiblement éloignée et par un second ressort précontraint (13), permettant un déplacement supplémentaire du piston depuis la position intermédiaire du piston (B) jusqu'à une seconde position finale (C) uniquement lorsqu'une pression de freinage plus importante et bien déterminée a été dépassée.

3. Dispositif indicateur selon la revendication 2, caractérisé en ce que le premier ressort (9) est disposé entre le fond de cylindre (7) et le piston (5) et que le second ressort (13) est disposé entre le fond de cylindre (7) et une gaine (10) pouvant glisser dans le cylindre (3) du piston (5), et qui est maintenu à distance des deux positions de base (A et C) du piston (5) dans le cylindre (3).

4. Dispositif indicateur selon la revendication 1, dont le dispositif de commutation présente au moins un piston (5', 5'') qui est actionné par la pression de freinage exercée à chaque instant sur les freins du véhicule et qui est chargé par la force d'un ressort mécanique (9) constituant la force de retour opposée à la pression de freinage, caractérisé en ce que le piston est subdivisé en deux pistons partiels (5' et 5'') qui sont déplaçables ensemble à l'encontre de la force élastique créée par un ressort (9) dans une position de base (A) jusqu'à la partie de la course correspondant à la zone d'indication intermédiaire (B), tandis qu'au cours de la partie de la course suivante, seul l'un des pistons (5'') se déplace encore à l'encontre de la force du ressort (9) jusqu'à sa seconde position de base (C).

5. Dispositif indicateur selon la revendication 4, caractérisé en ce que le piston est subdivisé en un piston annulaire supérieur (5') et un piston intérieur (5'') pouvant glisser dans le piston annulaire (5'), en ce que le ressort (9) est disposé entre un fond de cylindre (7) et les deux pistons (5' et 5'') et en ce qu'une butée (16) est disposée dans le cylindre (3) pour maintenir le piston annulaire (5') dans une position de piston intermédiaire (B), comprise entre les deux positions de base (A et C).

6. Dispositif indicateur selon la revendication 5, caractérisé en ce que le piston annulaire (5') présente un rebord (14) cylindrique guidant le piston intérieur (5''), en ce que le piston intérieur (5'') est relié à une tige de piston (6) portant un voyant (19), en ce que le ressort (9) charge la tige de piston (6) et en ce qu'une butée (15) de la tige de piston (6) peut venir s'appuyer sur la surface frontale du rebord (14), sous l'effet de la force du ressort (9).

7. Dispositif indicateur selon la revendication 1, caractérisé en ce que la gamme des pressions de signalisation s'étend d'environ 0,2 bar jusqu'à environ 0,5 bar.

# Fig.1

Fig. 2

# Fig. 3